# EUROPÄISCHE PATENTSCHRIFT

(11) **EP 3 382 334 B1**
(45) Veröffentlichungstag und Bekanntmachung des Hinweises auf die Patenterteilung: **11.05.2022**
(21) Anmeldenummer: 18159803.8
(22) Anmeldetag: 02.03.2018
(51) Int. Cl.: G01B 11/14

(54) **VERFAHREN ZUM MESSEN DES FORMATS EINES PLATTENFÖRMIGEN WERKSTÜCKS**
METHOD FOR MEASURING THE FORMAT OF A PLATELIKE WORKPIECE
PROCÉDÉ DE MESURE DU FORMAT D'UNE PIÈCE À USINER EN FORME DE PLAQUE

(30) Priorität: 09.03.2017 DE 102017002270
(43) Veröffentlichungstag der Anmeldung: 03.10.2018
(60) Teilanmeldung: 20188997.9
(73) Patentinhaber: IMA Schelling Deutschland GmbH, 32312 Lübbecke (DE)
(72) Erfinder: Hielscher, Ulrich, 32312 Lübbecke (DE)
(74) Vertreter: Schober, Mirko

(56) Entgegenhaltungen:
- EP-A1- 3 115 163
- DE-A1- 10 356 427
- DE-A1-102005 009 835
- DE-A1-102007 039 077
- DE-A1-102012 011 703
- DE-C1- 10 019 054
- JP-A- 2002 341 511
- US-B1- 6 167 607

## Beschreibung

Die Erfindung betrifft ein Verfahren zum Messen des Formats eines plattenförmigen Werkstücks.

Unter plattenförmigen Werkstücken sind im Folgenden insbesondere solche Werkstücke zu verstehen, deren Abmessungen in zwei zueinander rechtwinkligen Haupterstreckungsrichtungen wesentlich größer sind als in einer dritten zu den Haupterstreckungsrichtungen senkrechten Dickenrichtung.

Unter dem Format eines plattenförmigen Werkstücks sind im Folgenden insbesondere dessen Abmessungen in dessen Haupterstreckungsrichtungen zu verstehen.

Im Fall rechteckiger Werkstücke handelt es sich bei dem Format insbesondere um dessen Abmessungen, die das Werkstück parallel zu seinen Schmalseiten aufweist. Das Werkstück kann jedoch auch andere, insbesondere komplexere, Formen aufweisen. Hierbei handelt es sich insbesondere um Werkstücke, deren Flächenseiten Rundungen aufweisen, wie dies beispielsweise bei Tischplatten regelmäßig der Fall ist. In solchen Fällen beschreibt das Format in allgemeiner Form die Ausdehnungen des Werkstücks parallel zu seinen Flächenseiten.

Für die Messung des Formats eines derartigen plattenförmigen Werkstücks existieren grundsätzlich Möglichkeiten der mechanischen Vermessung. Hierbei werden Anschläge und/oder Tastelemente mit dem Werkstück in Berührung gebracht und so dessen Abmessungen in seinen Haupterstreckungsrichtungen ermittelt. Nachteilig an solchen Verfahren ist jedoch, dass hierzu eine exakte Ausrichtung des Werkstücks an den Anschlägen bzw. eine exakte Ausrichtung der Tastelemente an dem Werkstück erfolgen muss.

Diese Vorgehensweise ist vergleichsweise zeitaufwendig, zudem muss sich das Werkstück für eine präzise Messung in der Regel in Ruhe befinden. In modernen Produktionsprozessen führt dies zu Verzögerungen, die sich negativ auf die Gesamtproduktivität des Prozesses auswirken.

Von daher sind bereits in der Vergangenheit Verfahren entwickelt worden, die eine berührungslose Messung des Formats des Werkstücks ermöglichen. Solche Verfahren arbeiten beispielsweise nach dem Prinzip eines optischen Scanners, bei dem das Werkstück über ein beleuchtetes Messfeld bewegt wird und lichtempfindliche Sensoren die durch das Werkstück abgeschattete Fläche vermessen. Des Weiteren gibt es Erfassungssysteme mit einer oder mehreren Kameras. DE 103 56 427 A1 und auch DE 10 2005 009 835 A1 offenbaren Verfahren zum Ausrichten von Trägerplatten und Dekorfolien. Ausrichtungsmarkierungen am Rand von Trägerplatte und Dekorfolie werden erfasst und beides entsprechend zueinander ausgerichtet, die Folie wird abgelegt und die beiden Teile miteinander verbunden. DE 100 19 054 C1 offenbart ein Verfahren, bei dem das Zerteilen von beschichteten Platten, bei denen die Papierbeschichtung gewachsen sein kann, also die Maße der vorgegebenen Unterteilung nicht exakt mit dem Dekorlaufmaß übereinstimmen. Um den Versatz unauffällig zu machen, wird der tatsächliche Abstand zweier Dekormarkierungen mit einer Kamera bestimmt und mit dem Sollwert verglichen. Die durchzuführenden Schnitte werden so gesetzt, dass sich die Abweichung gleichmäßig über alle zuzuschneidenden Teile verteilt. Andere Verfahren arbeiten mit Kameras und einer Bilderkennungssoftware, wobei das Werkstück durch eine Kamera erfasst wird und in dem von der Kamera erzeugten Bild die vom Werkstück eingenommene Fläche des Bildes ermittelt wird. Bei entsprechender Kalibrierung kann von dieser auf die Größe des realen Werkstücks zurückgerechnet werden.

Das Problem derartiger Messverfahren ist es, dass es im Bereich der Schmalseiten des Werkstücks, also der Seiten des Werkstücks, die sich in dessen Dickenrichtung erstrecken, aufgrund der Kanten des Werkstücks zu Ungenauigkeiten kommt. Hierbei spielen zum einen Streueffekte eine Rolle, zum anderen können beispielsweise abgerundete Kanten zwischen den Schmalseiten und den Flächenseiten des Werkstücks dazu führen, dass die Position der Schmalseite nicht exakt erfasst wird.

Der vorliegenden Erfindung liegt daher die Aufgabe zugrunde, ein Verfahren zum Messen des Formats eines plattenförmigen Werkstücks anzugeben, das eine sowohl präzise wie auch schnelle Messung des Formats erlaubt.

Die Aufgabe wird gelöst durch ein Verfahren mit den Merkmalen des unabhängigen Anspruchs 1. Die Merkmale der abhängigen Ansprüche betreffen vorteilhafte Ausführungsformen.

Das erfindungsgemäße Verfahren sieht vor, dass Markierungen auf den Flächenseiten des plattenförmigen Werkstücks identifiziert, auf die Flächenseite des plattenförmigen Werkstücks auf- und/oder in das plattenförmige Werkstück eingebracht werden. In diesem Sinne ist eine einzige komplexe zusammenhängende Markierung ebenfalls als eine Kombination einer Mehrzahl einzelner Markierungen anzusehen. So kann beispielsweise ein einziges komplexes Muster auf die gesamte Flächenseite eines Werkstücks aufgebracht werden, das es ermöglicht, eine Mehrzahl definierter Positionen auf der Flächenseite zu identifizieren. In diesem Fall sind im Sinne der vorliegenden Erfindung die einzelnen definierten Positionen jeweils als individuelle Markierungen anzusehen.

Bei den Markierungen kann es sich um optisch erkennbare Markierungen handeln, die auf die Oberfläche des Werkstücks aufgebracht werden. Dies kann beispielsweise mittels Druckverfahren, insbesondere mittels Tintenstrahldruckerverfahren, erfolgen. Darüber hinaus ist es jedoch auch möglich, Markierungen in das plattenförmige Werkstück einzubringen. Hierbei kann es sich beispielsweise um elektronische Markierungen, wie beispielsweise RFID-Chips, handeln. Es ist aber beispielsweise auch möglich, Magnete in das plattenförmige Werkstück einzubringen und diese im Zusammenhang mit der vorliegenden Erfindung als Markierungen zu verwenden.

Ebenfalls ist es möglich, Merkmale der Flächenseite als Markierungen zu identifizieren. Diese Merkmale können sich bevorzugt bereits vor Anwendung des erfindungsgemäßen Verfahrens auf der Flächenseite befinden. Hierbei handelt es sich insbesondere um optische Merkmale der Flächenseite. Hierbei kann es sich um ein grafisches Muster einer Beschichtung der Flächenseite handeln, alternativ und/oder ergänzend ist es beispielsweise auch möglich, eine natürliche Holzmaserung zu nutzen. Als Markierungen werden dann Positionen auf der Flächenseite identifiziert, die charakteristische Merkmale aufweisen, so dass diese von einer Positionsermittlungseinrichtung erneut identifiziert werden können. So kann beispielsweise ein bestimmtes Oberflächenmuster in einer mit einem entsprechenden Datenspeicher ausgestatteten Steuereinrichtung gespeichert werden, um es als Markierung zu identifizieren.

Erfindungsgemäß werden die relativen Positionen der Markierungen zueinander vermessen und/oder die Markierungen an definierten relativen Positionen zueinander auf- und/ oder eingebracht. Auf diese Weise können die bekannten Positionen der Markierungen dazu genutzt werden, das Werkstück unter Zuhilfenahme der Positionen der Markierungen zu vermessen. Die Erfassung der Markierungen kann dabei insbesondere genutzt werden, um in Verbindung mit anderen bekannten oder gemessenen Relationen zwischen den Positionen der Markierungen und bestimmten Punkten des Werkstücks, insbesondere Positionen der Schmalseiten des Werkstücks, das Format des Werkstücks zu ermitteln. Mit anderen Worten wird die - technisch aufwändige - direkte Vermessung des Formats des Werkstücks ersetzt durch eine indirekte Vermessung des Formats des Werkstücks, bei der technisch einfacher zu erhaltende Abmessungsinformationen mit den relativen Positionen der Markierungen zueinander geometrisch bzw. rechnerisch kombiniert werden, um das Format des Werkstücks zu erhalten.

Das erfindungsgemäße Verfahren wird derart durchgeführt werden, dass zunächst zwei Markierungen im Bereich einer ersten Schmalseite des plattenförmigen Werkstücks auf eine Flächenseite des Werkstücks auf- und/oder in das Werkstück eingebracht werden. Die Markierungen werden entweder in einem definierten Abstand von der ersten Schmalseite auf- und/oder eingebracht, und/oder es werden die Abstände der Markierungen von der ersten Schmalseite des plattenförmigen Werkstücks gemessen. Auf diese Weise stehen Markierungen zur Verfügung, deren Abstand von der ersten Schmalseite des Werkstücks bekannt ist. Da sich die Markierungen in räumlicher Nähe zur ersten Schmalseite befinden, müssen - verglichen mit den Abmessungen des gesamten Werkstücks - lediglich kurze Distanzen vermessen werden. In einem nächsten Schritt wird die Position einer Geraden ermittelt, die beide Markierungen verbindet. Es versteht sich, dass hierfür auch mehr als zwei Markierungen genutzt werden können. Ebenfalls ist es möglich, eine zur Schmalseite vorzugsweise parallele Linie auf das Werkstück aufzubringen. Dies stellt dann eine unbestimmte Vielzahl punktförmiger Markierungen im Sinne der vorliegenden Erfindung dar.

Die beschriebene Ermittlung einer Geraden wird im Rahmen der erfindungsgemäßen Formatmessung für alle vier Schmalseiten des Werkstücks durchgeführt. Aus den so gewonnenen Geraden kann ein Viereck konstruiert werden. Die Ecken dieses Vierecks befinden sich an den Schnittpunkten der Geraden. Aus der Position und/oder den Abmessungen dieses Vierecks kann dann in Verbindung mit den Abständen der Markierungen von den jeweiligen Schmalseiten des Werkstücks das Format des Werkstücks ermittelt werden. Dieses Verfahren eignet sich in besonders vorteilhafter Weise in Verbindung mit Bearbeitungsverfahren und/oder Bearbeitungsvorrichtungen, bei denen ein Werkstück eine Bearbeitungseinrichtung mehrfach durchläuft und/oder eine Mehrzahl Bearbeitungseinrichtungen durchläuft, wobei jeweils eine Bearbeitung an einer Schmalseite vorgenommen wird. Im Rahmen dieser Bearbeitung der Schmalseite können dann die Markierungen aufgebracht und/oder vermessen werden. Bei der Bearbeitung der Schmalseite kann es sich in vorteilhafter Weise um das Aufbringen eines Kantenbands handeln, es kann sich jedoch auch um, vorzugsweise spanabhebende, andere Verfahren zur Bearbeitung der Schmalseite handeln. Diese können beispielsweise dazu dienen, die Schmalseite mit einer gewünschten Profilierung zu versehen.

Besonders vorteilhaft ist es in diesem Zusammenhang, wenn die Markierungen in definierten Positionen relativ zu den Schmalseiten des plattenförmigen Werkstücks positioniert werden. Dies führt insbesondere dazu, dass aufgrund des bekannten Abstands zwischen der Markierung und der Schmalseite des Werkstücks durch die Vermessung der Markierungen die Position der Schmalseiten und damit das Format des Werkstücks ermittelt werden kann. Die Vermessung der Markierungen gestaltet sich dabei technisch wesentlich einfacher als die direkte Vermessung des Formats des Werkstücks selbst, so dass eine insgesamt schnellere und genauere Messung des Formats des Werkstücks erfolgen kann.

Alternativ oder ergänzend ist es in vorteilhafter Weise möglich, dass die relativen Positionen der Markierungen zu Schmalseiten des plattenförmigen Werkstücks gemessen werden. Insbesondere in Verbindung mit bekannten relativen Positionen der Markierungen zueinander können so technisch einfach und präzise zu messende kurze Abstände zwischen Markierungen und Schmalseiten ermittelt werden und mit diesen auf das ungleich schwieriger und unpräziser zu messende Format des gesamten plattenförmigen Werkstücks zurückgeschlossen werden.

Bei den plattenförmigen Werkstücken handelt es sich gemäß der Erfindung um Werkstücke aus Holz oder Holzersatzwerkstoffen, wie Span- oder Holzfaserplatten, Laminaten, HDF- oder MDF-Platten. Vorzugsweise ist das plattenförmige Werkstück das Ergebnis einer Aufteilung eines großformatigen plattenförmigen Werkstücks. Hierbei ist es vorteilhaft, wenn die Markierungen bereits vor der Aufteilung des großformatigen plattenförmigen Werkstücks auf das großformatige plattenförmige Werkstück aufgebracht werden. In der Praxis kommt es häufig vor, dass plattenförmige Werkstücke der in Rede stehenden Art in den gewünschten Formaten dadurch erzeugt werden, dass sie aus großformatigen plattenförmigen Werkstücken ausgeschnitten werden. Die großformatigen plattenförmigen Werkstücke sind vorzugsweise auf ihren Flächenseiten bereits mit Beschichtungen versehen und/oder weisen auf diesen bereits eine für deren spätere Verwendung geeignete Beschaffenheit auf. Wenn die Markierungen bereits auf das großformatige Werkstück aufgebracht werden, ist es möglich, die Markierungen in dem gesamten Produktionsprozess, der sich an die Bereitstellung der großformatigen plattenförmigen Werkstücke anschließt, zu nutzen.

Ein besonderer Vorteil in diesem Zusammenhang ist es, wenn die Markierungen für die Steuerung der Aufteilung des großformatigen plattenförmigen Werkstücks genutzt werden. Hierbei können beispielsweise die Positionen der Markierungen benutzt werden, um eine Einrichtung zum Aufteilen des großformatigen Werkstücks, beispielsweise eine Säge und/oder ein Fräswerkzeug, anzusteuern. So kann es beispielsweise überflüssig werden, das großformatige Werkstück für die Aufteilung exakt zu positionieren. Aus den Positionen der Markierungen kann die Position des großformatigen Werkstücks und damit die korrekte Position für die gewünschten durchzuführenden Schnitte bei der Aufteilung des großformatigen plattenförmigen Werkstücks ermittelt werden.

Neben ihrer Position können die Markierungen noch weitere Informationen enthalten. Diese können beispielsweise in Form eines Barcodes oder eines QR-Code in den Markierungen enthalten sein. Es ist aber auch das Aufbringen ganzer Textfelder als Markierungen möglich. Die Markierungen können Informationen über die Beschaffenheit und/ oder die Abmessungen enthalten. Ebenfalls ist es möglich, Informationen über durchzuführende Bearbeitungsschritte in die Markierungen aufzunehmen. So können die Markierungen beispielsweise Informationen darüber enthalten, wie, d.h. insbesondere nach welchem Schnittplan, ein großformatiges plattenförmiges Werkstück aufzuteilen ist. Es können aber auch Informationen in den Markierungen enthalten sein, die die Art und Weise der weiteren Bearbeitung der Schmalseiten betreffen. Hierbei kann es sich insbesondere um Informationen handeln, die eine ggf. auf die Schmalseiten aufzubringende Kaschierung, ein sogenanntes Kantenband, betreffen.

Es ist allerdings auch möglich, dass die Informationen eine individuelle Identifikation des Werkstücks enthalten. Bei der individuellen Identifikation kann es sich beispielsweise um eine Seriennummer - im Klartext und/ oder codiert - handeln. Die individuelle Identifikation ermöglicht vorzugsweise eine eindeutige Identifizierung des Werkstücks im weiteren Produktionsprozess. Insbesondere im Zusammenhang mit einer Stückzahl-1-Fertigung ist die Möglichkeit, einzelne Werkstücke im Produktionsprozess jederzeit identifizieren zu können, vorteilhaft. Eine übergeordnete Steuerung kann dann bewirken, dass die einzelnen Bearbeitungsschritte jeweils mit den für das jeweilige Werkstück gewünschten individuellen Parametern durchgeführt werden. Auch können einzelne Werkstücke, die zu einem bestimmten, vorzugsweise individuell gefertigten, Produkt gehören, automatisiert zusammengestellt werden, insbesondere unabhängig davon, ob diese Werkstücke hintereinander bzw. gemeinsam den Produktionsprozess verlassen. Die individuelle Identifikation des Werkstücks erlaubt es vielmehr, einzelne Werkstücke gezielt bestimmten weiteren Bearbeitungs- und/ oder Logistikprozessen zuzuführen.

In vorteilhafter Weise ist das Ergebnis der Vermessung der Markierungen für eine Qualitätssicherungsmaßnahme nutzbar. Hierunter ist insbesondere zu verstehen, dass das Ergebnis der Vermessung des Formats des plattenförmigen Werkstücks mit einem Vorgabewert verglichen wird. Hierbei werden bevorzugt Toleranzen berücksichtigt, die besonders bevorzugt von den jeweiligen Qualitätsanforderungen an das jeweilige plattenförmige Werkstück abhängen. Auf diese Weise kann automatisiert entschieden werden, ob ein jeweiliges plattenförmiges Werkstück die Anforderungen an sein Format erfüllt oder nicht. Erfüllt das Werkstück die Anforderungen, so kann es vorzugsweise im Produktionsprozess verbleiben. Werkstücke, die die Anforderungen nicht erfüllen, werden bevorzugt automatisch aussortiert und/oder einer Nachbearbeitung zugeführt.

In vorteilhafter Weise ist es ebenfalls möglich, eine Markierung im Bereich einer ersten Ecke des plattenförmigen Werkstücks auf die Flächenseite des plattenförmigen Werkstücks auf- und/oder in das plattenförmige Werkstück einzubringen. Die Markierung wird bevorzugt in definierten Abständen von den an die erste Ecke angrenzenden Schmalseiten des plattenförmigen Werkstücks positioniert. Alternativ oder ergänzend ist es ebenfalls möglich, die Abstände der Markierungen von den an die erste Ecke angrenzenden Schmalseiten des plattenförmigen Werkstücks zu messen. Auf diesem Wege können die Positionen der Markierungen zu jeweils zwei Schmalseiten des plattenförmigen Werkstücks durch die Vermessung und/oder Festlegung zweier - verglichen mit den Abmessungen des plattenförmigen Werkstücks - vergleichsweise kurzer und somit einfach und präziser zu messender Distanzen ermittelt werden.

Besonders bevorzugt wird dies für alle vier Ecken einer Flächenseite des plattenförmigen Werkstücks durchgeführt. Auf diese Weise lässt sich ebenfalls ein Viereck mit den Markierungen als Eckpunkten ermitteln, dessen Abmessungen repräsentativ für die Abmessungen des Formats des plattenförmigen Werkstücks sind. Insbesondere unter Heranziehung der gemessenen und/oder vorgegebenen Abstände der Markierungen zu den jeweiligen Flächenseiten lässt sich so durch eine einfache und schnelle Erfassung der relativen Positionen der Markierungen zueinander eine präzise Messung des Formats des plattenförmigen Werkstücks durchführen.

Vorzugsweise erfolgt die Ermittlung der Positionen der Markierungen berührungslos. Die berührungslose Ermittlung der Positionen der Markierungen hat den Vorteil, dass die Ermittlung der Positionen schnell erfolgen kann. Regelmäßig haben berührungslose Verfahren den Vorteil, dass eine exakte Ausrichtung des Werkstücks relativ zu der Positionsermittlungseinrichtung, mit der die Positionen der Markierungen ermittelt werden, nicht notwendig ist. Dies stellt insbesondere im Hinblick auf eine schnelle Erfassung der Positionen in einem laufenden Produktionsprozess einen Vorteil gegenüber mechanischen Maßnahmen, wie Anschlägen und/oder Tastelementen, dar.

Weiter vorzugsweise erfolgt die Ermittlung der Positionen der Markierungen optisch. Eine optische Erkennung bietet den Vorteil, dass sie insbesondere mittels moderner digitaler Kamerasysteme, welche bevorzugt über eine zum Vermessen der Positionen der Markierungen geeignete Kalibrierung verfügen, vergleichsweise schnell, zuverlässig und kostengünstig realisiert werden kann.

Es ist von Vorteil, wenn die Ermittlung der Positionen der Markierungen mit einer Mehrzahl Positionsermittlungseinrichtungen erfolgt. Dies hat den Vorteil, dass eine einzelne Positionsermittlungseinrichtung lediglich einen vergleichsweise kleinen Bereich des plattenförmigen Werkstücks erfassen muss. Insbesondere wenn sich die Markierungen auf bestimmte Zonen bzw. Bereiche einer Flächenseite konzentrieren, wie beispielsweise die Bereiche der Ecken, können so mit den Positionsermittlungseinrichtungen gezielt nur die Bereiche des Werkstücks erfasst werden, in denen sich auch tatsächlich Markierungen befinden. Auf diese Weise kann beispielsweise bei der Verwendung von Kameras als Positionsermittlungseinrichtungen ein Großteil der mit den Kameras aufzunehmenden und im Hinblick auf Markierungen auszuwertenden Bildfläche eingespart werden. Dies führt zu Einsparungen sowohl im Hinblick auf die Kamerasysteme, da hier insgesamt eine niedrigere Gesamtzahl an Bildpunkten aufgenommen werden muss, als auch im Hinblick auf die benötigte Rechenleistung für die auszuwertende Anzahl an Bildpunkten.

Besonders bevorzugt sind die Positionsermittlungseinrichtungen relativ zueinander verfahrbar. Dies ermöglicht es, dass gezielt die Bereiche, welche die Markierungen aufweisen, mit den jeweiligen Positionsermittlungseinrichtungen erfasst werden, auch wenn unterschiedliche plattenförmige Werkstücke sich hinsichtlich der Positionen ihrer Markierungen und/oder hinsichtlich ihrer Abmessungen unterscheiden. So ist es beispielsweise möglich, dass, wenn auf ein zu vermessendes Werkstück mit einem kleinen Format ein zu vermessendes Werkstück mit einem großen Format folgt, die Abstände zwischen den Positionsermittlungseinrichtungen zwischen den Vermessungen beider Werkstücke erhöht werden. Auf diese Weise können dann beispielsweise Markierungen, die sich bei beiden Werkstücken im Bereich der Schmalseiten und/oder Ecken befinden, erfasst und deren Positionen bestimmt werden.

Vorteilhafterweise ist es möglich, die Ermittlung der Positionen der Markierungen im Hinblick auf die Winkel der Ecken der Werkstücke auszuwerten. Auf diese Weise können neben den reinen Abmessungen in den Haupterstreckungsrichtungen des Werkstücks auch die Winkel des Werkstücks vermessen werden. Sind die Positionen der Markierungen und deren Abstände zu den Schmalseiten bekannt, können, beispielsweise durch die Konstruktion von Geraden und/oder Vierecken aufgrund der Positionen der Markierungen, die Positionen der Schmalseiten und damit deren Winkel zueinander berechnet werden.

Vorzugsweise werden die Markierungen zur Ermittlung der Dicke einer auf die Schmalseiten aufgebrachten Kaschierung, insbesondere eines Kantenbandes, genutzt. Dies kann beispielsweise zum Zweck der Qualitätskontrolle geschehen. Es ist jedoch auch ebenfalls möglich, die so gewonnenen Daten über die Dicke der Kaschierung zu nutzen, um Bearbeitungsschritte, die dem Aufbringen der Kaschierung nachgelagert sind, zu steuern. Hierbei kann es sich insbesondere um Bearbeitungen spanabhebender Art, wie beispielsweise Fräsen und/oder Ziehen, handeln. Die genaue Kenntnis der tatsächlichen Dicke der Kaschierung erlaubt es hier, die Nachbearbeitung so zu steuern, dass sich ein möglichst exakter Übergang zwischen der Kaschierung und der Flächenseite des plattenförmigen Werkstücks ergibt.

Vorteilhafterweise ist es möglich, die erfindungsgemäßen Markierungen in einem nachgelagerten Fertigungsprozess und/oder Logistikprozess zu nutzen. Dies kann beispielsweise dann von Vorteil sein, wenn die plattenförmigen Werkstücke in einem nachgelagerten Fertigungsprozess zu komplexen Produkten weiterverarbeitet werden. So kann beispielsweise bei der Produktion von Möbeln der Zusammenbau der Möbel aus den plattenförmigen Werkstücken unter Zuhilfenahme der Markierungen gesteuert werden. Dies ist insbesondere im Zusammenhang mit Markierungen hilfreich, die Informationen über das jeweilige Werkstück enthalten. Alternativ und/oder ergänzend können die Markierungen auch in reinen Logistikprozessen genutzt werden. Auf diese Weise können Werkstücke beispielsweise unterschiedlichen Kommissionen zugeordnet werden.

Von besonderem Vorteil ist es, wenn die Markierung eine optische Markierung ist. Bevorzugt ist die optische Markierung so beschaffen, dass sie für das menschliche Auge nicht sichtbar ist. Eine solche Markierung wirkt sich nicht störend auf die optische Erscheinung des Werkstücks bei seiner bestimmungsgemäßen Verwendung aus.

Hierfür können vorzugsweise optische, insbesondere fluoreszierende, Markierungen verwendet werden, die nur unter bestimmten Lichtverhältnissen, beispielsweise bei der Bestrahlung mit UV-Licht, für die Positionsermittlungseinrichtung sichtbar werden. Alternativ und/oder ergänzend können die Markierungen auch so beschaffen sein, dass sich das von ihnen abgegebene bzw. reflektierte und/oder absorbierte Licht in einem für das menschliche Auge nicht sichtbaren Spektrum bewegt. Derartige Markierungen können dann beispielsweise durch spezielle Kameras im ultravioletten oder Infrarotbereich, der für das menschliche Auge nicht sichtbar ist, nachgewiesen werden.

Ebenfalls möglich ist die Verwendung von Markierungen, die so beschaffen sind, dass sie nach einer definierten Zeitspanne für das menschliche Auge nicht mehr sichtbar sind. Dies kann beispielsweise mit Pigmenten erreicht werden, die sich nach einer gewissen Zeit zersetzen. Ein derartiger Zersetzungsprozess kann beispielsweise Folge der Einwirkung von Luftsauerstoff oder von natürlicher ultravioletter Strahlung sein. Unter einer definierten Zeitspanne ist in diesem Zusammenhang insbesondere eine Zeitspanne zu verstehen, die sich so genau bestimmen lässt, dass sichergestellt werden kann, dass die Markierungen bis zum Abschluss des erfindungsgemäßen Verfahrens für die Positionsermittlungseinrichtung sichtbar bleiben und gleichzeitig bei Beginn der bestimmungsgemäßen Verwendung des Werkstücks für das menschliche Auge nicht mehr sichtbar sind. Es versteht sich, dass diese Zeitspanne in der Praxis gewissen Schwankungen, beispielsweise aufgrund unterschiedlicher Lichtverhältnisse, unterworfen sein kann.

Auch kann es vorteilhaft sein, wenn beispielsweise UVempfindliche Pigmente verwendet werden, die im Rahmen des erfindungsgemäßen Verfahrens bevorzugt gezielt mit UV-Licht bestrahlt werden. Sobald die Markierungen nicht mehr benötigt werden, können sie so gezielt "gelöscht" werden. Ebenfalls denkbar ist die Verwendung eines chemischen Löschverfahrens, mit dem sichtbare Markierungen durch eine Behandlung mit einer chemischen Substanz entfernt und/oder für das menschliche Auge unsichtbar gemacht werden.

Das erfindungsgemäße Verfahren eignet sich sowohl für eine Durchführung auf sogenannten Durchlaufmaschinen wie auch für eine Durchführung auf sogenannten Bearbeitungszentren.

Unter Durchlaufmaschinen sind in diesem Zusammenhang solche Bearbeitungseinrichtungen zu verstehen, bei denen die Werkstücke während deren Bearbeitung, vorzugsweise kontinuierlich, durch verschiedene Bearbeitungsstationen gefördert werden, wobei die einzelnen Bearbeitungsstationen nacheinandergelagerte Bearbeitungsschritte an den Werkstücken vornehmen. Bevorzugt wird während eines Durchlaufs durch eine Durchlaufmaschine zunächst eine Schmalseite bearbeitet, die weiteren Schmalseiten werden entweder in weiteren Durchläufen der gleichen Durchlaufmaschine oder in weiteren Durchlaufmaschinen bearbeitet. Hierbei werden Durchlaufmaschinen regelmäßig mit geeigneten Fördereinrichtungen kombiniert, um entsprechende Rückführungen und/oder Kreisläufe zur Bearbeitung aller Schmalseiten des jeweiligen Werkstücks zu realisieren.

Durchlaufmaschinen eignen sich insbesondere für die Bearbeitung von Werkstücken mit rechteckigem Querschnitt. Im Zusammenhang mit der vorliegenden Erfindung ist die Kombination einer Durchlaufbearbeitung mit dem erfindungsgemäßen Verfahren für Werkstücke mit rechteckigem Querschnitt besonders vorteilhaft, da während der Durchlaufbearbeitung Abmessungen zwischen den Schmalseiten und den Markierungen in einfacher und damit vorteilhafter Weise ermittelt bzw. diese Abstände festgelegt werden können.

Unter Bearbeitungszentren hingegen sind insbesondere solche Bearbeitungseinrichtungen zu verstehen, bei denen das Werkstück, zumindest im Wesentlichen, ruht, während Bearbeitungsaggregate um das Werkstück herum bewegt werden, um die Bearbeitung vorzunehmen. Nacheinander gelagerte Bearbeitungsschritte werden hierbei vorzugsweise vorgenommen, ohne dass die Position des Werkstücks verändert wird. Zwar kann bei Bearbeitungszentren ebenfalls eine Bewegung des Werkstücks, beispielsweise dessen Rotation und/oder eine Zustellbewegung während der Bearbeitung, erfolgen, es kommt jedoch nicht zu der für Durchlaufmaschinen charakteristischen Förderung der Werkstücke von Bearbeitungsstation zu Bearbeitungsstation.

Bearbeitungszentren eignen sich insbesondere für Werkstücke mit komplexen Geometrien der Flächenseiten. Die Stärke der Bearbeitungszentren, nämlich die - zumindest weitgehend - freie Positionierbarkeit der Bearbeitungsaggregate, erlaubt die Herstellung nahezu beliebiger Werkstückformen. In Kombination mit dem erfindungsgemäßen Verfahren ist dies auch im Hinblick darauf besonders vorteilhaft, dass Abstände zwischen Schmalseiten und Markierungen auch bei komplexen und von Werkstück zu Werkstück unterschiedlichen Geometrien der Flächenseite ermittelt bzw. festgelegt werden können. Die Bearbeitungszentren erlauben es, Markiereinrichtungen und/oder Positionserkennungseinrichtungen - analog zu den Bearbeitungsaggregaten - nahezu beliebig relativ zu dem Werkstück und insbesondere zu dessen Schmalseiten zu positionieren.

Die Erfindung wird im Folgenden anhand der Figuren 1 bis 14 schematisch näher erläutert.
Fig. 1 zeigt beispielhaft Positionen erfindungsgemäßer Markierungen auf einem plattenförmigen Werkstück in einer Draufsicht.
Fig. 2 bis Fig. 5 zeigen schrittweise das Aufbringen der Markierungen nach einem beispielhaften erfindungsgemäßen Verfahren.
Fig. 6 und Fig. 7 zeigen schrittweise das Aufbringen der Markierungen nach einem weiteren beispielhaften erfindungsgemäßen Verfahren.
Fig. 8 zeigt eine schematische Darstellung einer beispielhaften Vorrichtung zur Durchführung eines erfindungsgemäßen Verfahrens.
Fig. 9 zeigt eine schematische Detaildarstellung der Vorrichtung aus Fig. 8
Fig. 10 zeigt eine schematische Darstellung einer beispielhaften Positionsermittlungseinrichtung.
Fig. 11 zeigt eine schematische Darstellung einer Anordnung mit einer Mehrzahl Positionsermittlungseinrichtungen.
Fig. 12 zeigt eine schematische Darstellung der Ermittlung des Formats aus den Positionen der Markierungen nach einem erfindungsgemäßen Verfahren.
Fig. 13 und Fig. 14 zeigen schematische Darstellungen der Ermittlung des Formats aus den Positionen der Markierungen nach einem alternativen erfindungsgemäßen Verfahren.

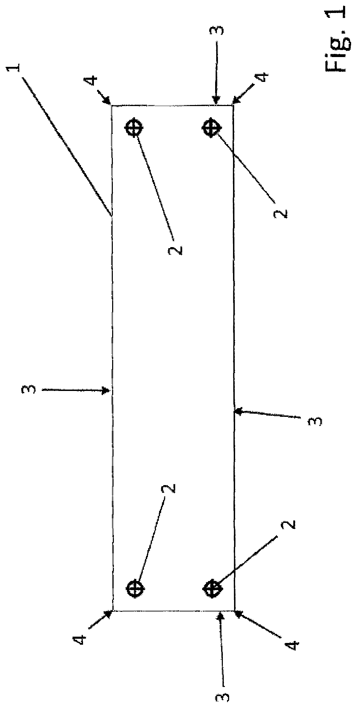

Das in Fig. 1 schematisch dargestellte Werkstück 1 weist erfindungsgemäß aufgebrachte Markierungen 2 auf. Die Markierungen 2 sind in vorteilhafter Weise im Bereich der Schmalseiten 3 und in ebenfalls vorteilhafter Weise im Bereich der Ecken 4 des beispielhaften plattenförmigen Werkstücks 1 positioniert.

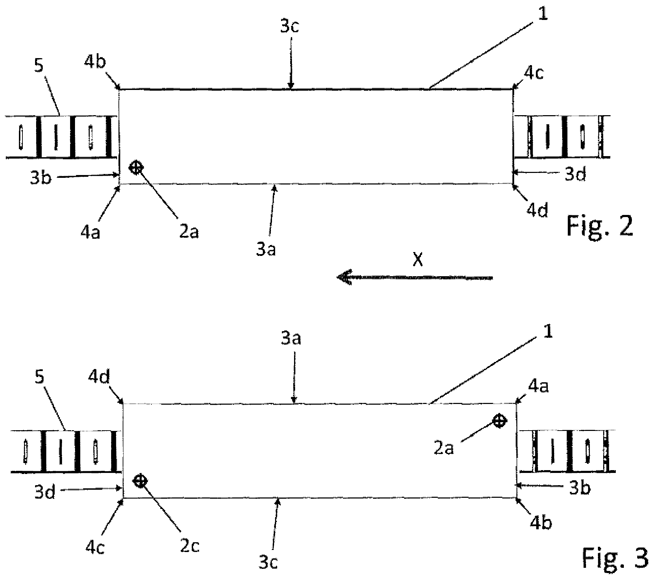

Die Markierungen 2 können vorteilhafterweise im Rahmen einer Bearbeitung der Schmalseiten 3 des plattenförmigen Werkstücks 1 aufgebracht werden. Dies ist beispielhaft in den Fig. 2 bis 5 dargestellt. Die schematischen Darstellungen zeigen, wie die einzelnen Markierungen 2 schrittweise im Rahmen einer Bearbeitung der Schmalseiten 3 des Werkstücks 1 aufgebracht werden. Die Bearbeitung der Schmalseiten 3 und damit das Aufbringen der Markierungen 2 nach dem erfindungsgemäßen Verfahren finden im gezeigten Beispiel vorzugsweise im Rahmen einer Bearbeitung mit einer Durchlaufmaschine statt. Hierbei wird das Werkstück 1 im Rahmen der Bearbeitung mittels einer Fördereinrichtung 5 durch den Arbeitsbereich einer nicht näher dargestellten Bearbeitungseinrichtung gefördert. Das Werkstück 1 wird mehrfach durch den Arbeitsbereich gefördert, wobei jeweils eine der Schmalseiten 3 bearbeitet wird.

Während des in Fig. 2 dargestellten ersten Durchlaufs des Arbeitsbereichs wird, bevorzugt im Rahmen der Bearbeitung der ersten Schmalseite 3a des Werkstücks 1, eine erste Markierung 2a auf einer Flächenseite des Werkstücks 1 aufgebracht. Die Markierungen befinden sich in vorteilhafter Weise sowohl im Bereich einer ersten Ecke 4a als auch einer ersten Schmalseite 3a und einer zweiten Schmalseite 3b des Werkstücks.

Während des in Fig. 3 dargestellten zweiten Durchlaufs des Werkstücks 1 durch den Arbeitsbereich wird die nächste Markierung 2c auf das Werkstück 1 aufgebracht. Diese befindet sich im gezeigten Beispiel bevorzugt sowohl im Bereich einer weiteren Ecke 4c als auch im Bereich zweier weiterer Schmalseiten 3c und 3d.

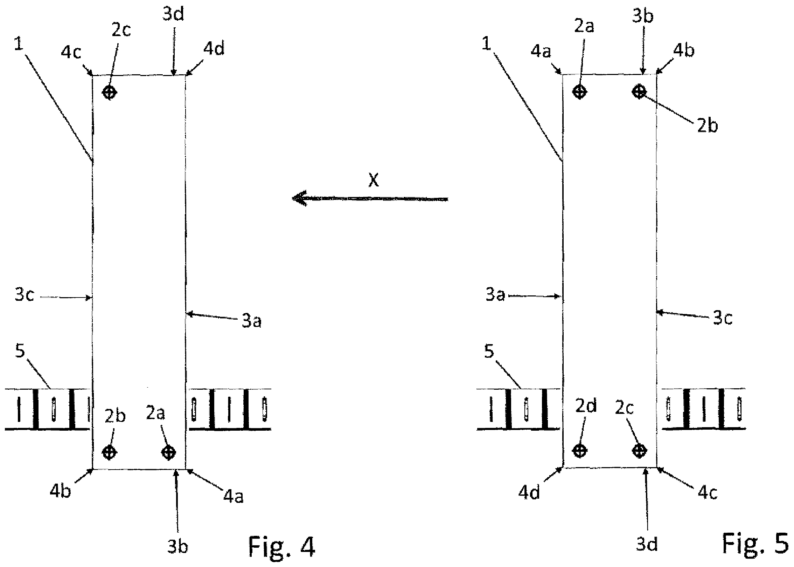

Während des in der Fig. 4 dargestellten weiteren Durchlaufs des Werkstücks 1 durch den Arbeitsbereich wird zunächst die Markierung 2b auf das Werkstück 1 aufgebracht. Die Markierung 2b befindet sich in vorteilhafter Weise sowohl im Bereich der Ecke 4b als auch in den Bereichen der Schmalseiten 3b und 3c. Im letzten, in Fig. 5 dargestellten Durchlauf wird die Markierung 2d aufgebracht. Diese befindet sich bevorzugt sowohl im Bereich der Ecke 4d als auch in den Bereichen der Schmalseiten 3d und 3a.

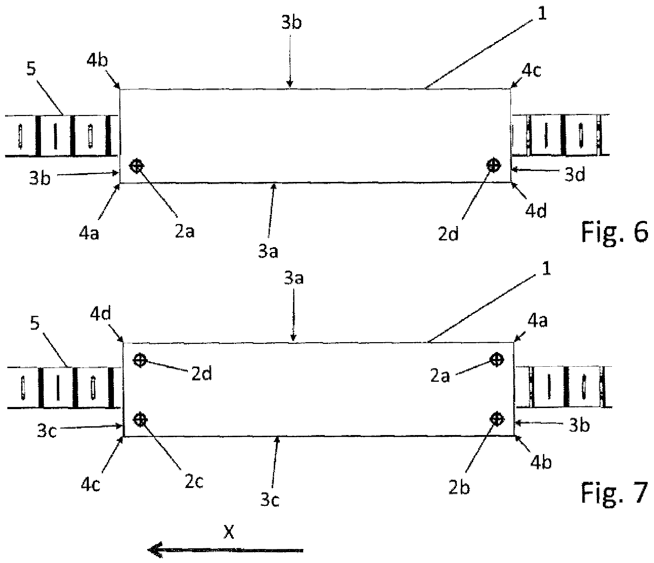

In den Fig. 6 und 7 ist ein alternatives Verfahren zum Aufbringen der Markierungen 2 im Rahmen eines erfindungsgemäßen Verfahrens dargestellt. Im Unterschied zu dem in den Fig. 2 bis 5 dargestellten beispielhaften Verfahren werden in dem alternativen, in den Fig. 6 und 7 dargestellten Verfahren, jeweils zwei Markierungen während eines einzigen Durchlaufs des Werkstücks 1 durch den Arbeitsbereich aufgebracht. In einem ersten Durchlauf, der in Fig. 6 dargestellt ist, werden die Markierungen 2a und 2d auf das Werkstück 1 aufgebracht. Das Aufbringen beider Markierungen findet hierbei bevorzugt im Rahmen der Bearbeitung der Schmalseite 3a statt. Während eines weiteren Durchlaufs, der in Fig. 7 dargestellt ist, werden die Markierungen 2b und 2c auf das Werkstück 1 aufgebracht. Das Aufbringen beider Markierungen findet dabei bevorzugt im Rahmen der Bearbeitung der Schmalseite 3c statt.

Auch bei dem in den Fig. 6 und 7 dargestellten Verfahren befinden sich die Markierungen 2 in vorteilhafter Weise in den Bereichen von Ecken 4 und Schmalseiten 3. Analog zu dem anhand der Fig. 2 bis 5 erläuterten Beispiel ist hierbei jede Markierung 2 im Bereich einer Ecke 4 und zweier Schmalseiten 3 angeordnet.

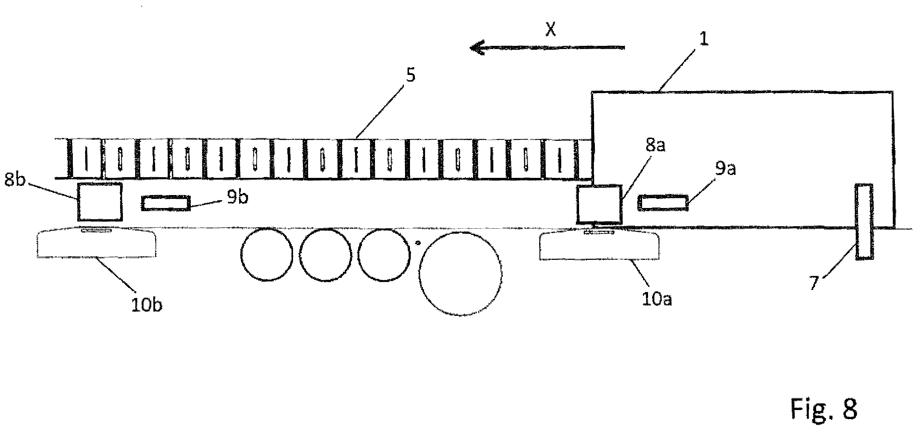

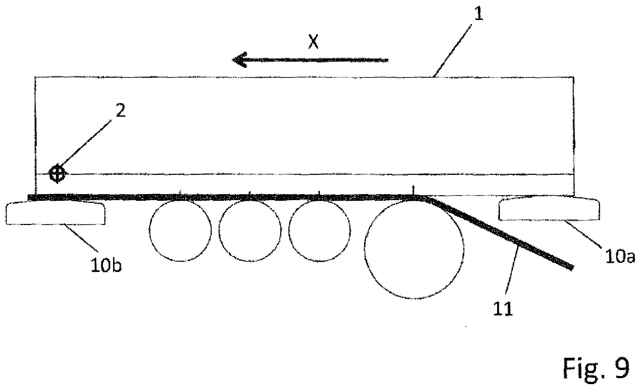

Eine beispielhafte Bearbeitungseinrichtung 6 ist in den Fig. 8 und 9 dargestellt. Die Werkstücke werden in der als Durchlaufmaschine ausgeführten Bearbeitungseinrichtung 6 durch eine Fördereinrichtung 5 in der Durchlaufrichtung X durch den Arbeitsbereich der Bearbeitungseinrichtung 6 gefördert. Die Bearbeitungseinrichtung 6 weist eine Markiereinrichtung 7 zum Aufbringen der Markierungen 2 auf das Werkstück 1 auf. Nach dem Aufbringen einer Markierung 2 auf das Werkstück 1 durchläuft das Werkstück 1 eine erste Positionsermittlungseinrichtung 8a. Bei der Positionsermittlungseinrichtung 8a handelt es sich in vorteilhafter Weise um eine optische Positionsermittlungseinrichtung. Die beispielhafte Bearbeitungseinrichtung 6 weist zudem eine mit der Positionsermittlungseinrichtung 8a zusammenwirkende Beleuchtungseinrichtung 9a auf. Die Beleuchtungseinrichtung 9a kann hierbei in vorteilhafter Weise ein bestimmtes Lichtspektrum erzeugen, welches die Markierungen 2 für die Positionsermittlungseinrichtung 8a sichtbar macht. In vorteilhafter Weise kann es sich um eine Markierung 2 handeln, die für das menschliche Auge - zumindest unter natürlichen Lichtverhältnissen - nicht sichtbar ist.

Die Bearbeitungseinrichtung 6 weist weiterhin eine erste Messeinrichtung 10a auf. Die Messeinrichtung 10a dient in vorteilhafter Weise zum Messen der Position einer Schmalseite 3, in deren Bereich die Markierung 2 aufgebracht ist. Die Messeinrichtung 10a und die Positionsermittlungseinrichtung 8a wirken nun derart zusammen, dass mittels beider Einrichtungen der Abstand zwischen der Markierung 2 und der Schmalseite 3 gemessen werden kann.

Während des Durchlaufens des Arbeitsbereichs der Bearbeitungseinrichtung 6 wird eine Schmalseite 3 des Werkstücks 1 bearbeitet. Im gezeigten Beispiel handelt es sich bei der Bearbeitung in vorteilhafter Weise um das Aufbringen eines Kantenbandes 11. Durch das Aufbringen des Kantenbandes 11 auf die Schmalseite 3 des plattenförmigen Werkstücks 1 ändert sich der Abstand zwischen der Schmalseite 3 des Werkstücks 1 und der Markierung 2 um die Dicke des Kantenbandes 11 im aufgebrachten Zustand. Die Dicke des Kantenbandes 11 im aufgebrachten Zustand kann sich hierbei von der Dicke des Kantenbandes 11 im unverarbeiteten Zustand unterscheiden. Dies kann daran liegen, dass eine Leimschicht zwischen dem Kantenband 11 und dem Werkstück 1 zur Dicke des aufgebrachten Kantenbandes 11 beiträgt. Es kann jedoch auch sein, dass während des Aufbringens erweichte Bereiche des Kantenbandes deformiert werden und hierbei die Dicke des Kantenbandes 11 reduziert wird.

Die gezeigte Bearbeitungseinrichtung 6 verfügt daher in vorteilhafter Weise über eine weitere Positionsermittlungseinrichtung 8b, die mit einer weiteren Messeinrichtung 10b zusammenwirkt. Eine weitere Beleuchtungseinrichtung 9b, die mit der Positionsermittlungseinrichtung 8b zusammenwirkt, ist ebenfalls vorgesehen. Durch das Zusammenwirken der Positionsermittlungseinrichtung 8b und der Messeinrichtung 10b kann so der neue Abstand zwischen der Schmalseite 3 und der Markierung 2 ermittelt werden. Bevorzugt wird dieser neue Abstand zu einem späteren Zeitpunkt im Rahmen einer erfindungsgemäßen Messung des Formats des plattenförmigen Werkstücks 1 verwendet. Der Vorteil der beispielhaften Bearbeitungseinrichtung 6 ist es, dass aufgrund der beiden Abstandsmessungen zwischen der Schmalseite 3 und der Markierung 2 zusätzlich die Dicke des Kantenbandes 11 im aufgebrachten Zustand ermittelt werden kann. Der so gewonnene Wert der Dicke des Kantenbandes 11 kann in vorteilhafter Weise für die Qualitätssicherung und/oder für die Steuerung eines nachgelagerten Bearbeitungsschrittes, beispielsweise einer spanabhebenden Bearbeitung des Kantenbandes 11, genutzt werden.

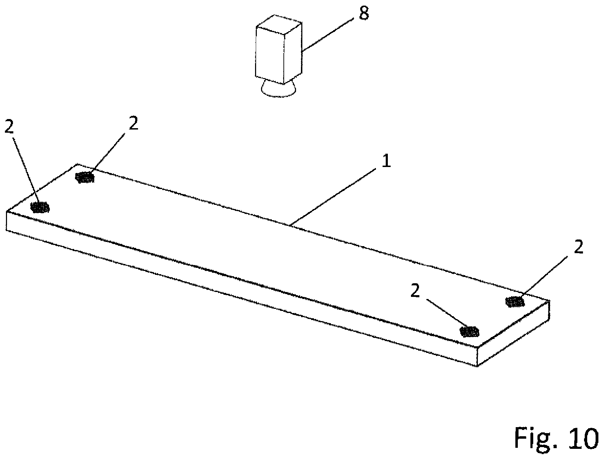

In Fig. 10 ist beispielhaft eine Positionsermittlungseinrichtung 8 dargestellt, die der eigentlichen Formatmessung im Rahmen des erfindungsgemäßen Verfahrens dient. Es handelt sich im gezeigten Beispiel bevorzugt um eine optische Positionsermittlungseinrichtung 8, wie beispielsweise eine Digitalkamera. Die Positionsermittlungseinrichtung 8 erfasst im gezeigten Beispiel die gesamte Flächenseite des Werkstücks 1, auf die die Markierungen 2 aufgebracht sind. Mit der Positionsermittlungseinrichtung 8 können nun die relativen Positionen der Markierungen 2 zueinander ermittelt werden.

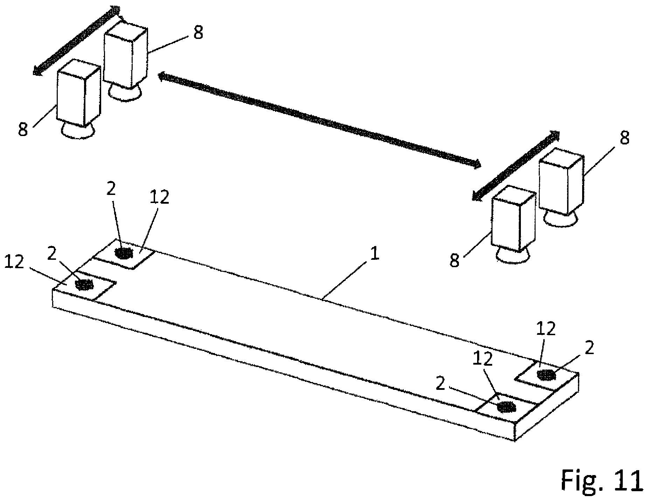

In Fig. 11 ist beispielhaft eine Anordnung aus einer Mehrzahl Positionsermittlungseinrichtungen 8 dargestellt. Im gezeigten Beispiel handelt es sich um vier Positionsermittlungseinrichtungen 8. Bei einer derartigen Anordnung ist es für die Ermittlung der relativen Positionen der Markierungen 2 zueinander nicht notwendig, dass die Positionsermittlungseinrichtungen 8 die gesamte Flächenseite des Werkstücks 1 erfassen. Es ist vielmehr ausreichend, wenn lediglich kleine Bereiche 12 der Flächenseite des Werkstücks 1 erfasst werden, in denen sich tatsächlich die Markierungen 2 befinden. Im gezeigten Beispiel sind die Positionsermittlungseinrichtungen 8 in vorteilhafter Weise relativ zueinander verfahrbar. Dies ermöglicht es, die Positionen von Markierungen 2 zu ermitteln, deren relative Positionen zueinander sich zwischen unterschiedlichen Werkstücken 1 stark unterscheiden, beispielsweise wenn die Werkstücke 1 unterschiedliche Formate aufweisen.

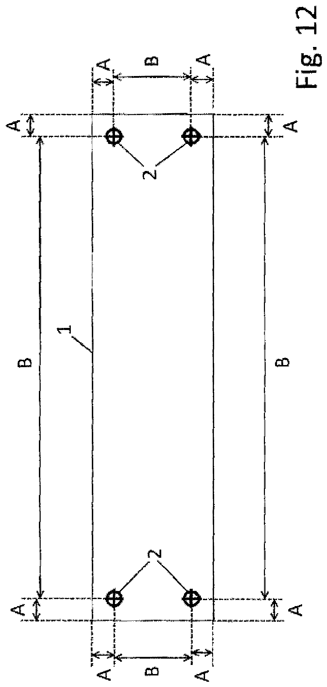

In Fig. 12 ist die Ermittlung des Formats des plattenförmigen Werkstücks 1 nach einem beispielhaften erfindungsgemäßen Verfahren schematisch dargestellt. In vorteilhafter Weise werden die Markierungen 2 in den Bereichen der Ecken 4 des Werkstücks 1 aufgebracht. Damit befinden sich die jeweiligen Markierungen 2 in den Bereichen zweier, an die jeweilige Ecke 4 angrenzender Schmalseiten 3.

Die Markierungen 2 werden in vorteilhafter Weise in definierten Abständen A zu den Schmalseiten 3, in deren Bereich sie sich befinden, aufgebracht. Alternativ und/ oder ergänzend ist es auch möglich, die Abstände A zwischen den jeweiligen Markierungen 2 und Schmalseiten 3 zu vermessen. Die Abstände A sind klein im Vergleich zu dem Format des Werkstücks 1. Sie können dadurch mit vergleichsweise geringem technischem Aufwand präzise bestimmt bzw. festgelegt werden.

In einem nächsten Schritt werden die relativen Positionen der Markierungen 2 zueinander bestimmt. Dies kann beispielsweise, wie in Fig. 12 dargestellt, erfolgen, indem die Abstände B zwischen den Markierungen hin zu den Schmalseiten des Werkstücks 1 in parallelen Richtungen bestimmt werden. Durch die Addition der jeweiligen Abstände A der Markierungen 2 zu den Schmalseiten 3 und den entsprechenden Abständen B zwischen den Markierungen 2 lässt sich so das Format des Werkstücks 1 ermitteln.

Aus den Positionsdaten der Markierungen 2 in Verbindung mit deren Abständen A zu den Schmalseiten 3 lassen sich noch weitere geometrische Daten über das zu vermessende Werkstück 1 gewinnen. Hierzu gehören insbesondere die Winkel zwischen den Schmalseiten 3 sowie die diagonalen Abmessungen der Flächenseite des Werkstücks 1.

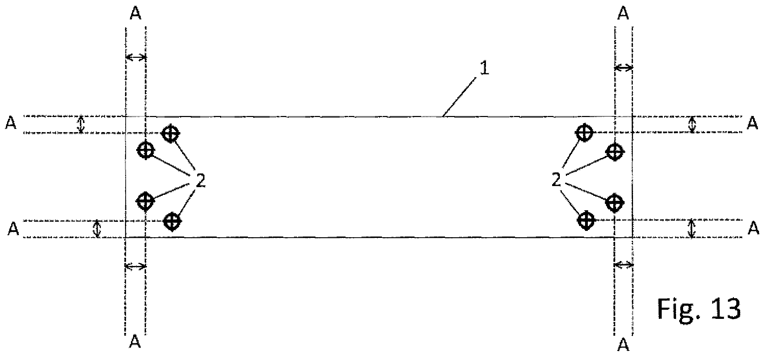

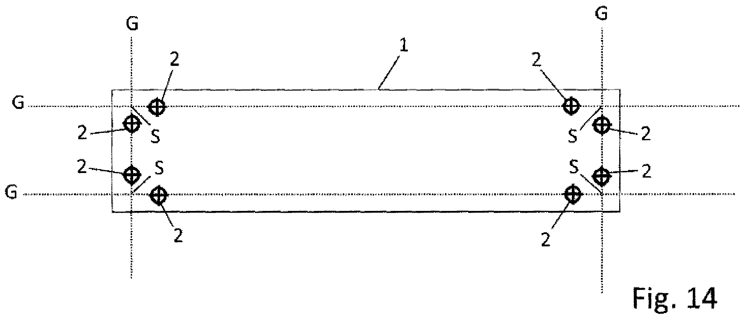

In den Fig. 13 und 14 ist ein alternatives erfindungsgemäßes Verfahren zur Ermittlung des Formats des plattenförmigen Werkstücks aus den Positionen der Markierungen 2 dargestellt. Bei dem alternativen Verfahren wird für jede der Markierungen 2 jeweils nur der Abstand zu einer Schmalseite gemessen. Dies ist in Fig. 13 schematisch dargestellt. Der Vorteil hieran ist, dass die Vermessung und/oder die Aufbringung in einem definierten Abstand A jeder Markierung 2 lediglich von einer Schmalseite 3 des Werkstücks 1 aus erfolgen muss.

Um in diesem Fall aus den relativen Positionen der Markierungen 2 zueinander das Format des Werkstücks 1 zu gewinnen, kann beispielsweise die in Fig. 14 gezeigte geometrische Hilfskonstruktion angewendet werden. Hierbei werden jeweils die Markierungen 2, deren Abstand zur gleichen Schmalseite 3 bekannt ist, durch eine errechnete Gerade G verbunden. Die Geraden G bilden ein Viereck, dessen Ecken durch die Schnittpunkte S der Geraden G bekannt sind. Aus den Positionsdaten dieses Vierecks in Verbindung mit den gemessenen Abständen A lässt sich nun das Format des Werkstücks 1 ausgehend von den Schnittpunkten S berechnen. Wenn sich die Schnittpunkte S nahe der Ecken 4 des Werkstücks 1 und die Markierungen 2 sich nahe der Schnittpunkte S der Geraden G befinden, lässt sich für die Berechnung der Abstand A einer einem Schnittpunkt S benachbarten Markierung 2 mit hinreichender Genauigkeit als Rechengröße für den Abstand zwischen dem Schnittpunkt S und der entsprechenden Schmalseite 3 verwenden. Das Format des Werkstücks 1 lässt sich so nun aus den relativen Positionen der Schnittpunkte S zueinander und den Abständen A analog zu dem zu der Fig. 12 beschriebenen Verfahren berechnen. Auch in diesem Fall ist es möglich, weitere geometrische Daten, wie insbesondere Winkel zwischen Schmalseiten 3 und/oder diagonale Abmessungen der Flächenseite des Werkstücks 1, zu berechnen.

## Patentansprüche

1. Verfahren zum Messen des Formats eines plattenförmigen Werkstücks (1), wobei es sich bei dem Werkstück um eines aus Holz- oder Holzersatzwerkstoffen, wie Span- oder Holzfaserplatten, Laminaten, HDF- oder MDF-Platten, handelt,
bei welchem Markierungen (2) auf einer Flächenseite des Werkstücks identifiziert, auf die Flächenseite des plattenförmigen Werkstücks (1) aufgebracht und/oder in das plattenförmige Werkstück (1) eingebracht werden, wobei relative Positionen der Markierungen (2) zueinander vermessen und/oder die Markierungen (2) in definierten relativen Positionen zueinander positioniert werden,
wobei wenigstens zwei Markierungen (2) im Bereich einer ersten Schmalseite (3) auf die Flächenseite des plattenförmigen Werkstücks (1) aufgebracht und/oder im Bereich einer ersten Schmalseite (3) in das plattenförmige Werkstück (1) eingebracht werden,
wobei die Markierungen (2) in definierten Abständen (A) von der ersten Schmalseite (3) des plattenförmigen Werkstücks (1) positioniert und/oder Abstände (A) der Markierungen (2) von der ersten Schmalseite (3) des plattenförmigen Werkstücks (1) gemessen werden,
wobei die Position einer Geraden (G) aus den Positionen dieser Markierungen (2) ermittelt wird,
wobei für jede der Schmalseiten (3) des Werkstücks (1) die Position einer entsprechenden Geraden (G) aufgrund von wenigstens zwei Markierungen (2) ermittelt und aus den Positionen der Geraden (G), insbesondere aus den Positionen der Schnittpunkte (S) der Geraden (G), und den Abständen (A) der Markierungen (2) von den jeweiligen Schmalseiten (3) das Format des Werkstücks (1) ermittelt wird.

2. Verfahren nach Anspruch 1,
**dadurch gekennzeichnet,**
**dass** die Markierungen (2) in definierten Positionen relativ zu den Schmalseiten (3) des plattenförmigen Werkstücks (1) positioniert werden und/oder die relativen Positionen der Markierungen (2) zu Schmalseiten (3) des plattenförmigen Werkstücks (1) gemessen werden.

3. Verfahren nach Anspruch 1 oder 2,
**dadurch gekennzeichnet,**
**dass** das plattenförmige Werkstück (1) das Ergebnis einer Aufteilung eines großformatigen plattenförmigen Werkstücks ist, wobei die Markierungen (2) bereits vor der Aufteilung des großformatigen plattenförmigen Werkstücks auf das großformatige plattenförmige Werkstück aufgebracht und/oder in das großformatige plattenförmige Werkstück eingebracht werden, wobei vorzugsweise für die Steuerung der Aufteilung des großformatigen plattenförmigen Werkstücks Positionen der Markierungen (2) und/oder in den Markierungen (2) enthaltene Informationen genutzt werden.

4. Verfahren nach einem der vorigen Ansprüche,
**dadurch gekennzeichnet,**
**dass** wenigstens eine der Markierungen (2) Informationen über das Werkstück (1), insbesondere über die Beschaffenheit des Werkstücks (1), die Abmessungen des Werkstücks (1), an dem Werkstück (1) durchzuführende Bearbeitungsschritte und/oder die individuelle Identifikation des Werkstücks (1), enthält.

5. Verfahren nach einem der vorigen Ansprüche,
**dadurch gekennzeichnet,**
**dass** das Ergebnis der Ermittlung der Positionen der Markierungen (2) für eine Qualitätssicherungsmaßnahme genutzt wird, insbesondere abhängig von dem Ergebnis der Ermittlung der Positionen der Markierungen (2) eine Nachbearbeitung und/oder Aussonderung des betroffenen Werkstücks (1) erfolgt.

6. Verfahren nach einem der Ansprüche 1 bis 5,
**dadurch gekennzeichnet,**
**dass** eine Markierung (2) im Bereich einer ersten Ecke (4) auf die Flächenseite des plattenförmigen Werkstücks (1) aufgebracht und/oder im Bereich einer ersten Ecke (4) in das plattenförmige Werkstück (1) eingebracht wird, wobei die Markierung (2) in definierten Abständen (A) von den an die erste Ecke (4) angrenzenden Schmalseiten (3) des plattenförmigen Werkstücks (1) positioniert wird und/oder die Abstände der Markierung (2) von den an die erste Ecke (4) angrenzenden Schmalseiten (3) des plattenförmigen Werkstücks (1) gemessen werden, insbesondere wobei für jede der Ecken (4) des Werkstücks (1) die Position einer entsprechenden Markierung (2) ermittelt wird, wobei aus den Positionen der Markierungen (2), vorzugsweise mittels des Abstands (A) der Markierungen (2) von den jeweiligen Schmalseiten (3), das Format des Werkstücks (1) ermittelt wird.

7. Verfahren nach einem der vorigen Ansprüche,
**dadurch gekennzeichnet,**
**dass** die Ermittlung der Positionen der Markierungen (2) berührungslos, insbesondere optisch, erfolgt.

8. Verfahren nach vorigen Ansprüche,
**dadurch gekennzeichnet,**
**dass** die Ermittlung der Position der Markierungen (2) mit einer Mehrzahl Positionsermittlungseinrichtungen (8), insbesondere Kameras, erfolgt, wobei die Positionsermittlungseinrichtungen (8) vorzugsweise relativ zueinander verfahren werden, insbesondere um die Positionen der Markierungen (2) auf unterschiedlich großen Werkstücken (1) zu ermitteln.

9. Verfahren nach vorigen Ansprüche,
**dadurch gekennzeichnet,**
**dass** Ergebnisse der Ermittlung der Positionen der Markierungen (2) im Hinblick auf die Winkel der Ecken (4) des plattenförmigen Werkstücks (1) ausgewertet werden.

10. Verfahren nach einem der vorigen Ansprüche,
**dadurch gekennzeichnet,**
**dass** die Position einer Markierung (2), vorzugsweise einer Mehrzahl Markierungen (2), zur Ermittlung der Dicke einer auf eine Schmalseiten aufgebrachten Kaschierung, insbesondere eines Kantenbandes (11), genutzt wird.

11. Verfahren nach einem der vorigen Ansprüche,
**dadurch gekennzeichnet,**
**dass** eine Markierung (2) zur Verfolgung des Werkstücks (1) in einem nachgelagerten Fertigungsprozess und/oder Logistikprozess genutzt wird.

12. Verfahren nach einem der vorigen Ansprüche,
**dadurch gekennzeichnet,**
**dass** die Markierung (2) eine optische Markierung (2) ist, die für das menschliche Auge nicht sichtbar ist und/oder die nach einer definierten Zeitspanne für das menschliche Auge nicht mehr sichtbar ist und/oder die nur unter bestimmten Beleuchtungsverhältnissen optisch nachweisbar ist.

## Claims

1. Method for measuring the format of a platelike workpiece (1) wherein the workpiece is comprised of wood or wood substitutes, such as chipboard or hollow fibre plates, laminates, HDF or MDF plates, wherein markings (2) are identified on a flat surface side of the workpiece, are applied to the flat surface side of the platelike workpiece (1) and/or are introduced into the platelike workpiece (1), wherein relative positions of the markings (2) with respect to one another are measured and/or the markings (2) are positioned in defined relative positions to one another, wherein at least two markings (2) are applied in the region of a first narrow side (3) to the flat surface side of the platelike workpiece (1) and/or are introduced in the region of a first narrow side (3) into the platelike workpiece (1), wherein the markings (2) are positioned at defined distances (A) from the first narrow side (3) of the platelike workpiece (1) and/or distances (A) of the markings (2) from the first narrow side (3) of the platelike workpiece (1) are measured, wherein the position of a straight line (G) is determined from the positions of these markings (2), wherein for each of the narrow sides (3) of the workpiece (1) the position of a corresponding straight line (G) is determined based on at least two markings (2) and from the positions of the straight lines (G), in particular from the positions of the intersection points (S) of the straight lines (G), and the distances (A) of the markings (2) from the respective narrow sides (3), the format of the workpiece (1) is determined.

2. Method according to claim 1, **characterised in that** the markings (2) are positioned in defined positions relative to the narrow sides (3) of the platelike workpiece (1) and/or the relative positions of the markings (2) to the narrow sides (3) of the platelike workpiece (1) are measured.

3. Method according to claim 1 or 2 **characterised in that** the platelike workpiece (1) is the result of a division of a large-format platelike workpiece, wherein the markings (2) are already applied to the large-format platelike workpiece and/or are introduced into the large-format platelike workpiece prior to the division of the large-format platelike workpiece, wherein positions of the markings (2) and/or data contained in the markings (2) are preferably used for controlling the division of the large-format platelike workpiece.

4. Method according to one of the preceding claims **characterised in that** at least one of the markings (2) contains data about the workpiece (1), in particular about the composition of the workpiece (1), the dimensions of the workpiece (1), machine steps to be carried out on the workpiece (1), and/or the individual identification of the workpiece (1).

5. Method according to one of the preceding claims **characterised in that** the result of determining the positions of the markings (2) is used for quality control measures, in particular post-machining and/or sorting out the relevant workpiece (1) is carried out in dependence on the result of identifying the positions of the markings (2).

6. Method according to one of claims 1 to 5 **characterised in that** a marking (2) is applied onto the flat surface side of the platelike workpiece (1) in the region of a first corner (4) and/or is introduced into the platelike workpiece (1) in the region of a first corner (4), wherein the marking (2) is positioned at defined distances (A) from the narrow sides (3), which adjoin the first corner (4), of the platelike workpiece (1) and/or the distances of the marking (2) from the narrow sides (3), which adjoin the first corner (4), of the platelike workpiece (1) are measured, in particular wherein for each of the corners (4) of the workpiece (1) the position of a corresponding marking (2) is determined, wherein the format of the workpiece (1) is determined from the positions of the markings (2), preferably by means of the distance (A) of the markings (2) from the respective narrow sides (3).

7. Method according to one of the preceding claims **characterised in that** determining the positions of the markings (2) is carried out contactlessly, in particular optically.

8. Method according to the preceding claims **characterised in that** determining the position of the markings (2) is carried out with a plurality of position-determining devices (8), in particular cameras, wherein the position-determining devices (8) are preferably moved relative to one another, in particular in order to determine the positions of the markings (2) on different sized workpieces (1).

9. Method according to the preceding claims **characterised in that** the results of determining the positions of the markings (2) with regard to the angles of the corners (4) of the platelike workpiece (1) are evaluated.

10. Method according to one of the preceding claims **characterised in that** the position of a marking (2), preferably a plurality of markings (2), is used for determining the thickness of a lamination, in particular an edging strip (11), applied to a narrow side.

11. Method according to one of the preceding claims **characterised in that** a marking (2) is used to track the workpiece (1) in a downstream productions process and/or logistics process.

12. Method according to one of the preceding claims **characterised in that** the marking (2) is an optical marking (2) which is not visible to the human eye and/or which is no longer visible after a defined time interval to the human eye and/or which can only be optically identified under certain lighting conditions.

## Revendications

1. Procédé de mesure du format d'une pièce en forme de plaque (1), dans lequel la pièce est en bois ou en matériaux de substitution du bois, comme des panneaux de particules ou des panneaux de fibres de bois, des agglomérés laminés, des plaques HDF ou MDF,
dans lequel des marquages (2) sont identifiés sur une face de la pièce, sont appliqués sur la face de la pièce en forme de plaque (1) et / ou sont introduits dans la pièce en forme de plaque (1),
dans lequel des positions relatives des marquages (2) sont mesurées l'une par rapport à l'autre et / ou les marquages (2) sont positionnés l'un par rapport à l'autre dans des positions relatives définies,
dans lequel au moins deux marquages (2) sont appliqués dans la zone d'un premier petit côté (3) sur la face de la pièce en forme de plaque (1) et / ou sont introduits dans la zone d'un premier petit côté (3) dans la pièce en forme de plaque (1),
dans lequel les marquages (2) sont positionnés à des distances définies (A) du premier petit côté (3) de la pièce en forme de plaque (1) et / ou des distances (A) des marquages (2) du premier petit côté (3) de la pièce en forme de plaque (1) sont mesurées,
dans lequel la position d'une droite (G) est déterminée à partir des positions de ces marquages (2),
dans lequel pour chacun des petits côtés (3) de la pièce (1) la position d'une droite (G) correspondante est déterminée sur la base d'au moins deux marquages (2), et le format de la pièce (1) est déterminé à partir des positions de la droite (G), surtout à partir des points d'intersection (S) de la droite (G), et des distances (A) des marquages (2) des petits côtés respectifs (3).

2. Procédé selon la revendication 1,
**caractérisé en ce**
**que** les marquages (2) sont positionnés dans des positions définies par rapport aux petits côtés (3) de la pièce en forme de plaque (1) et / ou les positions relatives des marquages (2) par rapport aux petits côtés (3) de la pièce en forme de plaque (1) sont mesurées.

3. Procédé selon la revendication 1 ou 2,
**caractérisé en ce**
**que** la pièce en forme de plaque (1) est le résultat de la division d'une pièce en forme de plaque (1) en grand format, dans lequel les marquages (2) sont appliqués sur la pièce en forme de plaque en grand format déjà avant la division de la pièce en forme de plaque en grand format et / ou sont introduits dans la pièce en forme de plaque en grand format, dans lequel, de préférence, pour le contrôle de la division de la pièce en forme de plaque en grand format des positions des marquages (2) et / ou des informations contenues dans les marquages (2) sont utilisées.

4. Procédé selon l'une quelconque des revendications précédentes, **caractérisé en ce**
**qu'**au moins un des marquages (2) contient des informations sur la pièce (1), surtout sur la nature de la pièce (1), les dimensions de la pièce (1), des étapes d'usinage à effectuer sur la pièce (1) et / ou l'identification individuelle de la pièce (1).

5. Procédé selon l'une quelconque des revendications précédentes, **caractérisé en ce**
**que** le résultat de la détermination des positions des marquages (2) est utilisé pour une mesure d'assurance de la qualité, surtout une retouche et / ou une élimination de la pièce (1) concernée est effectuée en fonction du résultat de la détermination des positions des marquages (2).

6. Procédé selon l'une quelconque des revendications 1 à 5, **caractérisé en ce**
**qu'**un marquage (2) dans la zone d'un premier coin (4) est appliqué sur la face de la pièce en forme de plaque (1) et / ou est introduit dans la pièce en forme de plaque (1) dans la zone d'un premier coin (4), dans lequel le marquage (2) est positionné à des distances définies (A) des petits côtés (3) de la pièce en forme de plaque (1) adjacents au premier coin (4) et / ou les distances du marquage (2) des petits côtés (3) de la pièce en forme de plaque (1) adjacents au premier coin (4) sont mesurées, surtout, dans lequel, pour chacun des coins (4) de la pièce (1), la position d'un marquage (2) correspondant est déterminée, dans lequel, à partir des positions des marquages (2), de préférence, par l'intermédiaire de la distance (A) des marquages (2) des petits côtés (3) respectifs, le format de la pièce (1) est déterminé.

7. Procédé selon l'une quelconque des revendications précédentes, **caractérisé en ce**
**que** la détermination des positions des marquages (2) est effectuée sans contact, surtout par voie optique.

8. Procédé selon des revendications précédentes,
**caractérisé en ce**
**que** la détermination de la position des marquages (2) est effectuée par l'intermédiaire d'une pluralité de moyens de détermination de position (8), surtout des caméras, dans lequel les moyens de détermination de position (8), sont déplacés, de préférence, l'un par rapport à l'autre, surtout pour déterminer les positions des marquages (2) sur des pièces (1) de différentes tailles.

9. Procédé selon des revendications précédentes,
**caractérisé en ce**
**que** des résultats de la détermination des positions des marquages (2) sont analysés en ce qui concerne les angles des coins (4) de la pièce en forme de plaque (1).

10. Procédé selon l'une quelconque des revendications,
**caractérisé en ce**
**que** la position d'un marquage (2), de préférence, d'une pluralité de marquages (2), est utilisée pour la détermination de l'épaisseur d'un laminage, appliqué sur un petit côté, surtout d'une alaise de chant (11).

11. Procédé selon l'une quelconque des revendications,
**caractérisé en ce**
**qu'**un marquage (2) est utilisé pour le suivi de la pièce (1) dans un procédé de fabrication et / ou procédé logistique en aval.

12. Procédé selon l'une quelconque des revendications précédentes,
**caractérisé en ce**
**que** le marquage (2) est un marquage (2) optique, qui n'est pas visible pour l'œil humain et / ou qui n'est plus visible pour l'œil humain après une période défini et / ou qui n'est détectable optiquement que sous certaines conditions d'éclairage.
